# EUROPEAN PATENT APPLICATION

(11) **EP 4 631 988 A1**
(43) Date of publication of application: **15.10.2025**
(21) Application number: 24169731.7
(22) Date of filing: 11.04.2024
(51) Int. Cl.: C08G 59/24, C08G 59/32, C08G 59/38, C08G 59/50, C08K 3/04, C08K 3/20, C08K 3/38

(54) **THERMALLY CONDUCTIVE POTTING COMPOSITION**

(71) Applicant: Henkel AG & Co. KGaA, 40589 Düsseldorf (DE)
(72) Inventor: Sarcina, Fabio, 20125 Milan (IT); Salmoiraghi, Eleonora, 20018 Sedriano (MI) (IT); Signorile, Marco, 27010 Vellezzo Bellini (IT)

(57) **Abstract**

A two-component (2K) composition comprising:
a first component comprising:
a) at least one liquid polyglycidyl ether of a polyhydric phenol, said polyglycidyl ether being characterized by a viscosity of from 100 to 5000 mPa.s; and,
b) at least one liquid epoxide compound which acts as a diluent for said part a); and,

a second component comprising:
c) a curative comprising at least two compounds which each possess at least two epoxide reactive groups per molecule, wherein said curative comprises:
ci) at least one cycloaliphatic polyamine; and,
cii) at least one acyclic polyamine having a tertiary amine group and at least two amine groups chosen from primary amine groups, secondary amine groups and combinations thereof;

wherein the composition further comprises d) thermally conductive filler; and,
wherein the composition is characterized by a molar ratio of epoxide-reactive groups to epoxide groups from 0.95:1 to 1.5: 1.

## Description

### FIELD OF THE INVENTION

The present disclosure is directed to a thermally conductive composition. More particularly, the present disclosure is directed to a two-component (2K) composition which comprises thermally conductive filler and which further comprises: a first component comprising epoxide compounds; and, a second curative component comprising at least one cycloaliphatic polyamine and at least one acyclic polyamine possessing a tertiary amine group. The composition has utility in the potting or encapsulation of electronic components and, thereby, in the manufacture of electric motors.

### BACKGROUND OF THE INVENTION

According to Allied Market Research, the global market for electric motors is projected to reach approximately US$140 Billion by 2025 and to continue thereafter at a compound annual growth rate of 4.5%. The market segments in which the most concentrated growth is projected to occur include industrial machinery, motor vehicles and heating ventilation and air conditioning (HVAC) systems.

The electric motors having utility in these market segments tend to be classified as integral horsepower (IHP) output electric motors. Whilst it is expected that newly developed electric motors should be able to provide high horsepower outputs, a concomitant industrial expectation is that such increased power outputs should not be achieved via larger or heavier power generation components. Rather, in the interests of energy efficiency and space conversation, future electric motors should be characterized by increased power density. However, such high power density motors will generate substantial vibration, strain and heat during their operation.

It is known that the encapsulation of certain electronic components within electric motors with a thermally conductive potting composition can serve to conduct heat away from said components to a heat sink. For example, US Patent No. 9,074,108 B2 (Huber et al.) describes a potting compound suitable for potting an electronic component, in particular a large-volume coil such as a gradient coil, said compound consisting of a supporting matrix in which at least one filler made of polymer nanoparticles is distributed.

WO/2020/087196 (Henkel AG & Co. KGaA et al.) discloses a thermally conductive potting composition, comprising: A) an epoxy resin having a viscosity of at least 500 mPa.s at 25°C; B) a modified epoxy resin with at least three epoxy functional groups, having a viscosity of at least 10 mPa.s and not greater than 1000 mPa.s at 25°C); core shell nanoparticles; D) fillers, which comprise: D1) a silane surface-modified spherical alumina, which has an average particle size of greater than 15 µm and not greater than 100 µm, and D2) a thermally conductive powder having an average particle size of greater than 0.01µm and not greater than 15 µm; and, E) a curing agent.

Within electric motors, the important candidate electronic components for potting or encapsulation are generally stationary components, of which particular mention may be made of coils, stators and printed circuit boards (PCB). Such components tend to possess small spaces between their constituent (conductive) elements: for example, small spaces exists between the windings of coils and stators. For a potting composition to provide efficient thermal management of such encapsulated components, all spaces between the conductive elements should be impregnated with the potting composition without cavities or bubbles being disposed therein.

Desirably, a potting composition having utility in encapsulating such components within a high energy density electric motor should possess at least one of: a low viscosity during processing so that all spaces between the conductive elements may be impregnated without cavities or bubbles; a high modulus of elasticity to provide rigidity and maintain the relative configuration of the conductive elements, such as the individual windings; high thermal conductivity to provide effective heat transfer from the conductive elements to a heat sink; a high heat resistance, as reflected in a high glass transition temperature (Tg) such that the properties of the potting composition are maintained within the operating temperature range of the electric motor; a low coefficient of thermal expansion to prevent mechanical stresses which can lead to *inter alia* crack formation within the conductive elements; a high partial discharge resistance; a low dielectric loss factor; and, flame retardance.

There is considered to be a need in the art to develop potting compositions which can meet several of these requirements.

### STATEMENT OF THE INVENTION

In accordance with a first aspect of the disclosure, there is provided a two-component (2K) composition comprising:
a first component comprising:
   a) at least one liquid polyglycidyl ether of a polyhydric phenol, said polyglycidyl ether being characterized by a viscosity of from 100 to 5000 mPa.s as determined at 25°C and 50% Relative Humidity; and,
   b) at least one liquid epoxide compound which acts as a diluent for said part a) and which has from 1 to 6 epoxide groups per molecule; and,
a second component comprising:
   c) a curative comprising at least two compounds which each possess at least two epoxide reactive groups per molecule, wherein said curative comprises:
      ci) at least one cycloaliphatic polyamine; and,
      cii) at least one acyclic polyamine having a tertiary amine group and at least one, preferably at least two amine groups chosen from primary amine groups, secondary amine groups and combinations thereof;
   wherein the composition further comprises d) thermally conductive filler; and,
   wherein the composition is characterized by a molar ratio of epoxide-reactive groups to epoxide groups from 0.95:1 to 1.5: 1.

In an important embodiment, the two-component (2K) composition comprises, based on the weight of the composition:
a first component comprising:
   from 30 to 60 wt.%, preferably from 30 to 50 wt.% of a) at least one liquid polyglycidyl ether of a polyhydric phenol, said polyglycidyl ether being characterized by a viscosity of from 100 to 5000 mPa.s as determined at 25°C and 50% Relative Humidity; and,
   from 1 to 10 wt.%, preferably from 1 to 8 wt.% of b) at least one liquid epoxide compound which acts as a diluent for said part a) and which has from 1 to 6 epoxide groups per molecule; and,
a second component comprising:
   from 10 to 30 wt.%, preferably from 15 to 30 wt.% of c) a curative comprising at least two compounds which each possess at least two epoxide reactive groups per molecule, wherein said curative comprises:
   ci) at least one cycloaliphatic polyamine; and,
   cii) at least one acyclic polyamine having a tertiary amine group and at least one, preferably at least two amine groups chosen from primary amine groups, secondary amine groups and combinations thereof;

   wherein the composition further comprises from 20 to 50 wt.%, preferably from 20 to 40 wt.% of d) said thermally conductive filler; and,
   wherein the composition is characterized by a molar ratio of epoxide-reactive groups to epoxide groups from 0.95:1 to 1.5: 1.

It is preferred that the liquid polyglycidyl ether of part a) has a viscosity of from 500 to 5000 mPa.s, preferably from 500 to 4000 mPa.s, more preferably from 1000 to 3000 mPa.s as determined at 25°C and 50% Relative Humidity. Independently or additional to this viscosity characterization, it is preferred that the liquid polyglycidyl ether of part a) has an epoxide equivalent weight of from 100 to 320 g/eq.

Good results have been obtained wherein part a) comprises or consists of at least one digylcidyl ether of a dihydric phenol. More particularly, it is desirable that part a) comprises or consists of at least one diglycidyl ether chosen from: diglycidyl ethers of bisphenol A; diglycidyl ethers of bisphenol F; and, mixtures thereof.

In certain embodiments, the liquid epoxide of part b) may have from 2 to 6 epoxide groups per molecule, preferably from 2 to 4 epoxide groups per molecule and more preferably 3 epoxide groups per molecule. Independently or additional to this functionality characterization, it is preferred that the liquid epoxide of part b) has an epoxide equivalent weight of from 100 to 320 g/eq.

In certain embodiments of the composition, the particles of thermally conductive filler are characterized by: an aspect ratio of less than 2, preferably less than 1.5 or more preferably less than 1.3; and / or, a mean volume particle size (D_{V}50), as measured by laser diffraction, of from 0.1 to 500 µm, preferably from 0.5 to 200 µm or more preferably from 0.5 to 100 µm. Independently of or additional to this morphology, it is preferred that said thermally conductive filler comprises at least one particulate chosen from aluminum oxide, aluminum nitride, boron nitride, magnesium oxide, zinc oxide, expanded graphite and mixtures thereof.

In accordance with a second aspect of the disclosure, there is provided a cured product obtained from the composition as defined hereinabove and in the appended claims. The cured product may be characterized by a thermal conductivity of from 0.5 to 2.5 W/m*K, preferably from 0.6 to 1.8 W/m*K, most preferably from 0.8 to 1.4 W/m*K.

The present disclosure still further provides for the use of the cured product in the potting of electronic components. Important examples of electronic components which may be potted in this manner include but are not limited to coils, stators and printed circuit boards such as those found in electric motors.

The composition of the present disclosure has an initial viscosity, as determined immediately after combination of the components thereof, which provides for effective wetting of the application substrate(s), of which electronic components provide an important example. Moreover, the composition can be efficiently cured without necessarily requiring either the temperature of the composition or the temperature of the application substrate to be elevated above room temperature.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive unless stated to be so, and permutations thereof remain within the scope of this disclosure.

### DEFINITIONS

As used herein, the singular forms "*a*", "*an*" and "*the*" include plural referents unless the context clearly dictates otherwise.

The terms "*comprising*", *"comprises"* and *"comprised o*f" as used herein are synonymous with *"including", "includes",* "*containing*" or *"contains",* and are inclusive or open-ended and do not necessarily exclude additional, non-recited members, elements or method steps.

As used herein, the term *"consisting of*" excludes any element, ingredient, member or method step not specified. For completeness, the term *"comprising"* encompasses *"consisting of*"*.*

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient defined by said range may be absent from the composition or may be present in the composition in an amount up to x wt.%.

The words "*preferred*", "*preferably*"*,* "*desirably*" and "*particularly*" are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word "*exemplary*" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

As used throughout this application, the word "*may*" is used in a permissive sense - that is meaning to have the potential to - rather than in the mandatory sense.

Spatially relative terms, such as "*upper*", "*lower*", "*top*", "*back*", "*above*", "*below*", "*left*", "*right*" and the like are used herein to describe an element's relationship to another element(s) as illustrated in the figures. Obviously all such spatially relative terms refer to the orientation shown in the figures only for ease of description and are not necessarily limiting given that an apparatus can assume orientations different from those illustrated in the figures when in use.

As used herein, room temperature is 23°C plus or minus 2°C. As used herein, "*ambient conditions*" means the temperature and pressure of the surroundings in which either the composition or a cured product obtained therefrom is located.

The molecular weights referred to in this specification can be measured with gel permeation chromatography (GPC) using polystyrene calibration standards, such as is done according to ASTM 3536.

Viscosities of the compositions described herein are, unless otherwise stipulated, measured using the Anton Paar Viscometer, Model MCR 301 at standard conditions of 25°C and 50% Relative Humidity (RH). The viscometer is calibrated one time a year and checked by services. The calibration is done using standard liquids of known viscosity from 1 to 50,000 cps (Parallel Plate PP20 and at a shear rate of 1s⁻¹ at 23°C). Measurements of the compositions according to the present disclosure are done using the parallel plate PP20 at different shear rates from 1.5 to 100 s⁻¹.

Unless otherwise stated, the term "*particle size*" refers to the largest axis of the particle. In the case of a generally spherical particle, the largest axis is the diameter.

The term "*mean volume particle size*" *(Dv50)*, as used herein, refers to a particle size corresponding to 50% of the volume of the sampled particles being greater than and 50% of the volume of the sampled particles being smaller than the recited Dv50 value. Similarly, if used, the term "*Dv90*" refers to a particle size corresponding to 90% of the volume of the sampled particles being smaller than and 10% of the volume of the sampled particles being greater than the recited Dv90 value. Particle size is determined herein by laser diffraction using Anton Paar Particle Size Analyzer (PSA) 1190.

As used herein, "*aspect ratio*" is defined as the ratio of the particle diameter located perpendicular to the maximum diameter (i.e., the Aspect Diameter) to the maximum diameter. The aspect ratio can be evaluated by image analyses of oriented particles. If the aspect ratio is being determined on a collection of particles, the aspect ratio may be measured on a few representative particles and the results averaged: representative particles should be sampled by ASTM D5680-95a (Reapproved 2001).

As used herein, the term "*thermally conductive*" refers to a material having a thermal conductivity of at least 10 W/m K as determined according to ASTM E1530 at 23°C and at a relative humidity of 50%. Materials which are thermally conductive are not precluded from being electrically conductive. Thus thermally conductive filler mentioned herein may be both thermally conductive and electrically conductive or, alternatively, may be thermally conductive and electrically insulating.

The term "*expanded graphite*" as used herein references a graphite which has been heated, optionally in the presence of a polymeric or acidic agent, to separate the individual platelets thereof. The term is considered to encompass exfoliated graphite. The expanded graphite usually does not have any significant crystalline order as evidenced by an x-ray diffraction pattern.

As used herein, the term "*metallic*" may be used to denote pure metal, metal alloys or metal composites. As used herein, the term "*alloy*" refers to a substance composed of two or more metals or of a metal and a non-metal which have been intimately united, usually by being fused together and dissolved in each other when molten.

"*Two-component (2K) compositions"* in the context of the present disclosure are understood to be compositions in which a first component and a second component are stored in separate vessels because of their (high) reactivity. The two components are mixed only before or during application and then react, typically without additional activation, with bond formation and thereby formation of a polymeric network. Herein higher temperatures may be applied in order to accelerate the cross-linking reaction.

The term "*Mannich Base*" is used herein in accordance with its standard definition in the art as a ketonic amine obtainable from the condensation of ammonia, diamines or polyamines with active hydrogen components selected from aldehydes, ketones, esters or aromatics (e.g. phenols) and/or heteroaromatics. Phenalkamines-herein acting as curing agents - are Mannich base compounds that are the reaction product of an aldehyde, an amine and a phenolic compound.

As used herein, the term "*monomer*" refers to a substance that can undergo a polymerization reaction to contribute constitutional units to the chemical structure of a polymer. The term "*monofunctional*", as used herein, refers to the possession of one polymerizable moiety. The term "*polyfunctiona*l", as used herein, refers to the possession of more than one polymerizable moiety.

The term "*C₃-C₁₈ cycloalkyl*" as used herein means an optionally substituted, saturated cyclic hydrocarbon having 3-18 carbon atoms. In the present disclosure, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

The term "*hetero*" as used herein refers to groups or moieties containing one or more heteroatoms, such as N, O, Si and S. Thus, for example "*heterocyclic*" refers to cyclic groups having, for example, N, O, Si or S as part of the ring structure. "*Heteroalkyl*", "*heterocycloalkyl*" and "*heteroaryl*" moieties are alkyl, cycloalkyl and aryl groups as defined hereinabove, respectively, containing N, O, Si or S as part of their structure.

As used herein, the term "*equivalent (eq.)*" relates, as is usual in chemical notation, to the relative number of reactive groups present in a reaction. The term "*equivalent weight*" as used herein refers to the molecular weight divided by the number of a function concerned. As such, "*epoxy equivalent weight*" (EEW) means the weight of resin, in grams, that contains one equivalent of epoxy.

As used herein, the term "*epoxide*" denotes a compound characterized by the presence of at least one cyclic ether group, namely one wherein an ether oxygen atom is attached to two adjacent carbon atoms thereby forming a cyclic structure. The term is intended to encompass monoepoxide compounds, diepoxide compounds, higher polyepoxide compounds having more than two epoxide groups and epoxide terminated prepolymers. The term "*monoepoxide compound*" is meant to denote epoxide compounds having one epoxide group. The term "*polyepoxide compound*" is meant to denote epoxide compounds having at least two epoxide groups. The term "*diepoxide compound*" is meant to denote epoxide compounds having two epoxide groups.

The epoxide may be unsubstituted but may also be inertly substituted. Exemplary inert substituents include chlorine, bromine, fluorine and phenyl.

By the term "*polyglycidyl polyether of a polyhydric phenol*" is meant a polyepoxide compound having: terminal epoxy groups; one or more aromatic nucleus or nuclei, including fused aromatic nuclei; and, at least two aliphatic groups including terminal epoxy containing aliphatic groups, the aliphatic groups being united to said aromatic nucleus or nuclei through carbon to oxygen to carbon linkages. Such compounds may be produced by the reaction of epichlorohydrin with a polyhydric phenol.

The term "*electronic component*" denotes any component, member or apparatus which fulfils any electric, magnetic and/or electronic functionality. This means that electric, magnetic and/or electromagnetic signals may be applied to and/or generated by the electronic component during regular use.

The term "*coil*" as used herein defines a number of turns or fractions of turns of an electrically conductive material having a elongate shape, such as a wire, ribbon or trace. There is no intention to limit the coil geometry herein: for instance, the cross-section of the coil may be flat, rectangular, circular or semi-circular. The term "*coil*" encompasses such physical forms as solenoidal coils, spiral coils, helical coils, Helmholtz coils, birdcage coils and the like. The coil may be disposed on a supporting substrate: in this embodiment, the coil may be formed *in situ* on a substrate by a conventional methods - such as wrapping, winding, layering or photolithography - or may alternatively be pre-formed and transferred to the substrate.

The term "*printed circuit board*" - often referenced herein with the abbreviation "*PCB*" - denotes any planar board, panel, or other type of support, constructed of insulative, conductive or semiconductive material, supporting circuit connections manufactured by etching, spraying, deposition, embossing or any other additive or subtractive technique to form circuit conductors on the board. The term "*printed circuit board*" encompasses both hand and machine-wired boards. The board may or may not include further circuit components - such as resistors, capacitors, inductors, integrated circuits and discreet circuit elements - supported on the board and connected to one or more circuit conductors.

The term "*stator*" as used herein denotes the stationary structure of a power generator and herein comprises a plurality of windings disposed on a planar disc or frame in which the rotating magnets of the rotor are inducing a voltage. The stator further comprises a contact pin embedded in the coils or windings which is in electrical connection with the wireless power transmitting device, optionally via a printed circuit board and / or a rechargeable battery.

### DETAILED DESCRIPTION OF THE INVENTION

As described above, the present disclosure provides a two-component (2K) composition which comprises:
a first component comprising:
   a) at least one liquid polyglycidyl ether of a polyhydric phenol, said polyglycidyl ether being characterized by a viscosity of from 100 to 5000 mPa.s as determined at 25°C and 50% Relative Humidity; and,
   b) at least one liquid epoxide compound which acts as a diluent for said part a) and which has from 1 to 6 epoxide groups per molecule; and,
a second component comprising:
   c) a curative comprising at least two compounds which each possess at least two epoxide reactive groups per molecule, wherein said curative comprises:
      ci) at least one cycloaliphatic polyamine; and,
      cii) at least one acyclic polyamine having a tertiary amine group and at least one, preferably at least two amine groups chosen from primary amine groups, secondary amine groups and combinations thereof;
   wherein the composition further comprises d) thermally conductive filler; and,
   wherein the composition is characterized by a molar ratio of epoxide-reactive groups to epoxide groups from 0.95:1 to 1.5: 1.

### a) Liquid Polyglycidyl Ether of a Polyhydric Phenol

The composition of the present disclosure comprises a) at least one liquid polyglycidyl ether of a polyhydric phenol, said polyglycidyl ether being characterized by a viscosity of from 100 to 5000 mPa.s as determined at 25°C and 50% Relative Humidity. Typically the composition should comprise, based on the weight of the composition, from 30 to 60 wt.% of a) said at least one liquid polyglycidyl ether. For example, the composition may comprise from 30 to 50 wt.% or from 40 to 50 wt.% of a) said at least one liquid polyglycidyl ether, based on the weight of the composition.

It is preferred that the or each liquid polyglycidyl ether of part a) has a viscosity of from 500 to 5000 mPa.s as determined at 25°C and 50% Relative Humidity. In particular, the or each polyglycidyl ether of part a) may have a viscosity of from 500 to 4000 mPa.s or from 1000 to 3000 mPa.s, as determined at 25°C and 50% Relative Humidity.

In an alternative statement of preference, which is not intended to be mutually exclusive of the viscosity conditions given above, the polyglycidyl ether should have an epoxide equivalent weight of from 100 to 700 g/eq, for example from 100 to 320 g/eq. And generally, polyglycidyl ethers having epoxide equivalent weights of less than 500 g/eq. or even less than 400 g/eq. are preferred: this is predominantly from a costs standpoint, as in their production, lower molecular weight epoxy resins require more limited processing in purification.

In an important embodiment, part a) of the composition comprises or consists of at least one digylcidyl ether of a dihydric phenol, said diglycidyl ether being characterized by a viscosity of from 100 to 5000 mPa.s as determined at 25°C and 50% Relative Humidity. In particular, part a) of the composition comprises or consists of at least one diglycidyl ether chosen from: diglycidyl ethers of bisphenol A; diglycidyl ethers of bisphenol F; and, mixtures thereof.

Examples of suitable bisphenol-A epoxy resins include, but are not limited to: DER^{™} 331, DER^{™} 332 and DER^{™} 383, available from Olin; JER^{™} 828, available from Mitsubishi Chemical Corporation; Epotec YD 128, available from Aditya Birla Chemicals Limited; and, Epiclon EXA-850CRP, available from Dic Corporation. Examples of suitable bisphenol-F epoxy resins include, but are not limited to: DER^{™} 354, available from Olin; and, Epiclon 830, Epiclon 830S, Epiclon EXA-830CRP, Epiclon EXA-830LVP, Epiclon 835 and Epiclon EXA-835LV, available from Dic Corporation. An exemplary bisphenol-A/F epoxy resin blend is DER^{™} 353, available from Olin.

### b) Diluent Epoxide Compound

The composition of the present disclosure comprises b) at least one liquid epoxide compound which acts as a diluent for said part a) and which has from 1 to 6 epoxide groups per molecule. For surely, this epoxide compound (b)) is distinct from the compound or compounds included in part a) of the composition. Typically the composition should comprise, based on the weight of the composition, from 1 to 10 wt.% of b) said at least one liquid epoxide compound. For example, the composition may comprise from 1 to 8 wt.% or from 2 to 6 wt.% of b) said at least one liquid epoxide compound, based on the weight of the composition.

The liquid epoxide compounds may be pure compounds but equally may be mixtures of epoxy functional compounds, including mixtures of compounds having different numbers of epoxide groups per molecule. The liquid epoxide compound may be saturated or unsaturated, aliphatic, cycloaliphatic, aromatic or heterocyclic and may be substituted. Further, the liquid epoxide compound may also be monomeric or polymeric.

It is preferred that the liquid epoxide compounds has from 2 to 6 epoxide groups per molecule, such as from 2 to 5 or from 2 to 4 epoxide groups per molecule. Liquid epoxide compounds having 3 epoxide groups per molecule may be mentioned in particular. In an alternative statement of preference, which is not intended to be mutually exclusive of that given above, the liquid epoxide compound should have an epoxide equivalent weight of from 100 to 700 g/eq, for example from 100 to 320 g/eq. And generally, polyepoxide compounds having epoxide equivalent weights of less than 500 g/eq. or even less than 400 g/eq. are preferred.

As examples of types or groups of liquid epoxide compounds which may be included in the composition, mention may be made of: glycidyl ethers of polyhydric alcohols; glycidyl ethers of polyhydric phenols; glycidyl esters of polycarboxylic acids; and, polyfunctional glycidylamines.

Exemplary polyglycidyl ethers include but are not limited to: glycerol polyglycidyl ether; trimethylolmethane triglycidyl ether; trimethylolethane triglycidyl ether; trimethylolpropane triglycidyl ether; pentaerythritol polyglycidyl ether; diglycerol polyglycidyl ether; polyglycerol polyglycidyl ether; sorbitol polyglycidyl ether; triphenylolmethane triglycidyl ether; trisphenol triglycidyl ether; trihydroxybiphenyl triglycidyl ether; tetraphenylol ethane triglycidyl ether; tetraglycidyl ether of tetraphenylol ethane; 1,2,6-hexanetriol triglycidyl ether; glycerol triglycidyl ether; diglycerol triglycidyl ether; glycerol ethoxylate triglycidyl ether; castor oil triglycidyl ether; fluoroglycinol triglycidyl ether; and, propoxylated glycerine triglycidyl ether.

Glycidyl esters of polycarboxylic acids having utility in the present disclosure are preferably derived from polycarboxylic acids which contain three or more carboxylic acid groups and no other groups reactive with epoxide groups. The polycarboxylic acids can be aliphatic, cycloaliphatic, aromatic and heterocyclic. The preferred polycarboxylic acids are those which contain not more than 18 carbon atoms per carboxylic acid group of which suitable examples include but are not limited to: aconitic acid; propane-1,2,3-tricarboxylic acid (*β-carboxyglutaric acid*); trimer acids of unsaturated fatty acids, such as trimer acids of linseed fatty acids; trimellitic acid; trimesic acid; and, polymers and co-polymers of (meth)acrylic acid.

Exemplary polyglycidyl amines include but are not limited to: N,N,N',N'- tetraglycidyl-4,4'methylene bisbenzenamine; p-aminophenol triglycidyl ether; m-aminophenol triglycidyl ether; tetraglycidyl bis(aminomethyl)cyclohexane; and, N,N,N',N'-tetraglycidyl-m-xylenediamine.

Examples of highly preferred liquid epoxide compounds include: trimethylolethane triglycidyl ether; trimethylolpropane triglycidyl ether, such as Epodil 762 available from Evonik; pentaerythritol polyglycidyl ether, such as Epotec RD129 available from Azelis; castor oil triglycidyl ether, such as ERISYS^{™} GE-35H; polyglycerol-3-polyglycidyl ether, such as ERISYS^{™} GE-38; sorbitol glycidyl ether, such as ERISYS^{™} GE-60; Epikote 1032H60 (manufactured by Japan Epoxy Resins Co., Ltd.); Epikote 1031S (manufactured by Japan Epoxy Resins Co., Ltd.); TECHMORE VG3101 (manufactured by Mitsui Chemicals, Inc.); polyfunctional glycidylamines, such as Kane Ace 414 (available from Kaneka Corporation), ELM-100 (manufactured by Sumitomo Chemical Co., Ltd.), MY721 and MY0510 (manufactured by Ciba Specialty Chemicals Inc.), Araldite^{®} MY0600-CH (available from Hunstman) and Tetrad^{®} X and Tetrad^{®} C available from Mitsubushi Gas Chemicals Co.; and, dicyclopentadiene type epoxy resins, such as ZX-1257 (manufactured by Tohto Kasei Co., Ltd.) and HP-7200 (manufactured by Dainippon Ink and Chemicals Incorporated). The use of trimethylolethane triglycidyl ether and trimethylolpropane triglycidyl ether, independently or in combination, may be mentioned.

The above aside, the composition can in certain embodiments comprise glycidoxy alkyl alkoxy silanes having the formula: 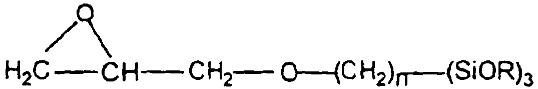 wherein: each R is independently selected from methyl or ethyl; and,
n is from 1-10.

Exemplary silanes, which me be used alone or in combination, include but are not limited to: γ-glycidoxy propyl trimethoxy silane, γ-glycidoxy ethyl trimethoxy silane, γ-glycidoxy methyl trimethoxy silane, γ-glycidoxy methyl triethoxy silane, γ-glycidoxy ethyl triethoxy silane, γ-glycidoxy propyl triethoxy silane; and, 8-glycidooxyoctyl trimethoxysilane. When present, the epoxide functional silanes should constitute less than 10 wt.%, preferably less than 8 wt.% or less than 5 wt.%, based on the total weight of the epoxide compounds.

The present disclosure does not preclude the first component of the curable compositions from further comprising one or more cyclic monomers selected from the group consisting of: oxetanes; cyclic carbonates; cyclic anhydrides; and, lactones. However, such cyclic co-monomers should constitute less than 10 wt.%, preferably less than 8 wt.% or less than 5 wt.%, based on the total weight of the epoxide functional compounds in the first component.

### c) Curative

The curative c), provided in the second component of the composition, comprises at least two compounds which each possess at least two epoxide reactive groups per molecule, wherein said curative comprises:
ci) at least one cycloaliphatic polyamine; and,
cii) at least one acyclic polyamine having a tertiary amine group and at least one, preferably at least two amine groups chosen from primary amine groups, secondary amine groups and combinations thereof.

This combination of the compounds ci) and cii) is especially beneficial as it provides in combination with the mentioned first component a high glass transition temperature Tg of the cured product, even so the first component and the uncured composition had initially a low viscosity.

The term "*cycloaliphatic amine*" refers to a molecule with an amine group which is connected to an aliphatic carbon atom of a cycloaliphatic moiety. The term "*cycloaliphatic*" denotes a saturated or unsaturated but non-aromatic carbocyclic radical comprising one or several fused rings, which rings may be optionally fused. The cycloaliphatic group may be unsubstituted or may optionally be substituted with one or more halogen. The term "*cycloaliphatic*" also includes "*heterocycloaliphatic*" groups, that is non-aromatic monocyclic or polycyclic rings in which one or more carbon atoms of the ring(s) have been replaced with a heteroatom. Herein the cycloaliphatic group is preferably a C₃ -C₁₈ cycloalkyl group of which specific mention may be made of cycloheptyl, cyclohexyl and cyclopentyl groups.

In an embodiment, the cycloaliphatic amine of constituent ci) is a primary amine and contains at least one primary amine group (-NH₂). The cycloaliphatic radicals may be present at either the alpha-position directly attached to the amine group or at the beta position adjacent to said alpha-position.

Exemplary cycloaliphatic amines ci) having at least one primary amine group (-NH₂) include but are not limited to: cyclohexane-1,2-diamine; cyclohexane-1,3-diamine; cyclohexane-1,4-diatnine; bis(4-aminocyclohexyl)methane; bis(4-amino-3-methylcyclohexyl)methane; bis(4-amino-3-ethylcyclohexyl)methane; bis(4-amino-3,5-dimethylcyclohexyl)methane; bis(4-amino-3-ethyl-5-methylcyclohexyl)methane; 1-amino-3-aminomethyl-3,5,5-trimethylcyclohexane; 2- and / or 4-methyl-1,3-diaminocyclohexane; 1,3-bis(aminomethyl)-cyclohexane; 1,4-bis(aminomethyl)cyclohexane; 2,5(2,6)-bis(aminomethyl)-bicyclo[2.2.1]heptane (norborane diamine, NBDA); 3(4),8(9)-bis(aminomethyl)tricyclo[5.2.1.02,6]-decane (TCD-diamine); 1,4-diamino-2,2,6-trimethylcyclohexane (TMCDA); N,N-bis(3-aminopropyl)cyclohexylamine; 1,8-menthanediamine; N-cyclohexyl-1,2-ethanediamine; N-cyclohexyl-1,3-propanediamine; 3-cyclohexylamino-1-pentylamine; 4-aminomethyl-piperidine; N-(2-aminoethyl)piperazine; and, mixtures thereof. In an embodiment, constituent ci) comprises or consists of cyclohexane-1,2-diamine.

Commercial examples of cycloaliphatic amines having utility in constituent ci) include: Ancamine 2264, Ancamine 2280 and Ancamine 2286 available from Air Product and Chemical Inc.; Baxxodur EC331, available from BASF; Versamine C31, available from Cognis; and, Epicure 3300 available from Momentive Specialty Chemicals.

In a further embodiment, constituent ci) comprises a cycloaliphatic ether group-containing diamine obtained from the propoxylation and subsequent amination of 1,4-dimethylolcyclohexane, such as that material commercially available as Jeffamine^{®} RFD-270 (from Huntsman).

Exemplary polyamines which may be used in constituent cii) of the curative include but are not limited to: N,N'-bis(aminopropyl)-piperazine; N,N-bis(3-aminopropyl)methylamine; N,N-bis(3-aminopropyl)ethylamine; N,N-bis(3-aminopropyl)propylamine; N,N-bis(3-aminopropyl)-2-ethyl-hexylamine; tris(2-aminoethyl)amine; tris(2-aminopropyl)amine; tris(3-aminopropyl)amine; N,N-dimethyldipropylenetriamine (*DMPAPA, N'-(3-Aminopropyl)-N,N-dimethyl-1,3-propanediamine*); and, the products from the double cyanoethylation and subsequent reduction of fatty amines derived from natural fatty acids, such as N,N-bis(3-aminopropyl)dodecylamine and N,N-bis(3-aminopropyl)tallow alkylamine, commercially available as Triameen^{®} Y12D and Triameen^{®} YT (from Akzo Nobel). The use of N,N-dimethyldipropylenetriamine may be mentioned in particular.

It is preferred that the curative c) consists of or consists essentially of: ci) said at least one cycloaliphatic amine; and, cii) said at least one acyclic polyamine having a tertiary amine group and at least one, preferably at least two amine groups chosen from primary amine groups, secondary amine groups and combinations thereof. However, it is not precluded that the curative may comprise - typically in an amount up to 10 mol.%, based on the total moles of said curative - further compounds possessing at least two epoxide reactive groups per molecule. Such supplementary compounds may, in particular, include either one or both of: ciii) at least one polyamine which is distinct from constituents ci) and cii) and which possesses at least two amine hydrogens reactive toward epoxide groups; and, civ) at least one mercapto compound having at least two mercapto groups reactive toward epoxide groups.

The at least one polyamine civ) having at least two amine hydrogens reactive toward epoxide groups should, in particular, contain primary and / or secondary amine groups and have an equivalent weight per primary or secondary amine group of not more than 150 g/eq., more preferably not more than 125 g/eq.

Suitable polyamines, which may be used alone or in combination in constituent div), include but are not limited to the following:
ciii)-1: Aliphatic or arylaliphatic primary diamines of which the following examples may be mentioned: 2,2-dimethyl-1,3-propanediamine; 1,3-pentanediamine (DAMP); 1,5-pentanediamine; 1,5-diatnino-2-methylpentane (MPMD); 2-butyl-2-ethyl-1,5-pentanediamine (C11-neodiamine); 1,6-hexanediamine (hexamethylenediamine, HMDA); 2,5-dimethyl-1,6-hexanediatnine; 2,2,4- and / or 2,4,4-trimethylhexamethylenediamine; 1,7-heptanediamine; 1,8-octanediamine; 1,9-nonanediamine; 1,10-decanediamine; 1,11-undecanediamine; 1,12-dodecanediamine; 3,9-bis(3-aminopropyl)-2,4,8,10-tetraoxaspiro[5.5]undecane; and, 1,3-bis(aminomethyl)benzene (MXDA).
ciii)-2: Ether group-containing aliphatic primary polyamines of which the following specific examples may be mentioned: bis(2-aminoethyl)ether; 3,6-dioxaoctane-1,8-diamine; 4,7-dioxadecane-1,10-diamine; 4,7-dioxadecane-2,9-diamine; 4,9-dioxadodecane-1,12-diamine; 5,8-dioxadodecane-3,10-diamine; 4,7,10-trioxatridecane-1,13-diamine and higher oligomers of these diamines; bis(3-aminopropyl)polytetrahydrofuranes and other polytetrahydrofuran diamines; polyoxyalkylenedi- or -triamines obtainable as products from the amination of polyoxyalkylenedi- and -triols and which are commercially available under the name of Jeffamine^{®} (from Huntsman), under the name of polyetheramine (from BASF) or under the name of PC Amines^{®} (from Nitroil). A particular preference may be noted for the use of Jeffamine^{®} D-230, Jeffamine^{®} D-400, Jeffamine^{®} D-600, Jeffamine^{®} D-2000, Jeffamine^{®} D-4000, Jeffamine^{®} T-403, Jeffamine^{®} T-3000, Jeffamine^{®} T-5000, Jeffamine^{®} EDR-104, Jeffamine^{®} EDR-148 and Jeffamine^{®} EDR-176, as well as corresponding amines from BASF or Nitroil.
ciii)-3: Primary diamines with secondary amine groups of which the following examples may be mentioned: 3-(2-aminoethyl)aminopropylamine, bis(hexamethylene)triamine (BHMT); diethylenetriamine (DETA); triethylenetetramine (TETA); tetraethylenepentamine (TEPA); pentaethylenehexamine (PEHA); higher homologs of linear polyethyleneamines, such as polyethylene polyamines with 5 to 7 ethyleneamine units (so-called "higher ethylenepolyamine," HEPA); products from the multiple cyanoethylation or cyanobutylation and subsequent hydrogenation of primary di- and polyamines with at least two primary amine groups, such as dipropylenetriamine (DPTA), N-(2-aminoethyl)-1,3-propanediamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine or N,N'-bis(3-atnino-1-ethylpropyl)-2-methyl-1,5-pentanediatnine.
ciii)-4: Polyamines with one primary and at least one secondary amino group of which the following examples may be mentioned: N-butyl-1,2-ethanediamine; N-hexyl-1,2-ethanediamine; N-(2-ethylhexyl)-1,2-ethanediamine; N-methyl-1,3-propanediamine; N-butyl-1,3-propanediamine; N-(2-ethylhexyl)-1,3-propanediamine; 3-methylamino-1-pentylamine; 3-ethylamino-1-pentylamine; fatty diamines such as N-cocoalkyl-1,3-propanediamine; products from the Michael-type addition reaction of primary aliphatic diamines with acrylonitrile, maleic or fumaric acid diesters, citraconic acid diesters, acrylic and methacrylic acid esters, acrylic and methacrylic acid amides and itaconic acid diesters, reacted in a 1:1 molar ratio; products from the partial reductive alkylation of primary polyamines with aldehydes or ketones, especially N-monoalkylation products of the previously mentioned polyamines with two primary amine groups and in particular of 1,6-hexanediamine, 1,5-diamino-2-methylpentane, 1,3-bis(aminomethyl)cyclohexane, 1,4-bis(aminomethyl)cyclohexane, 1,3-bis(aminomethyl)benzene, BHMT, DETA, TETA, TEPA, DPTA, N3-amine and N4-amine, wherein preferred alkyl groups are benzyl, isobutyl, hexyl and 2-ethylhexyl; and, partially styrenated polyamines such as those commercially available as Gaskamine^{®} 240 (from Mitsubishi Gas Chemical).
ciii)-5: Secondary diamines and, in particular, N,N'-dialkylation products of the previously mentioned polyamines with two primary amine groups, especially N,N'-dialkylation products of 1,6-hexanediamine, 1,5-diamino-2-methylpentane, 1,3-bis(aminomethyl)cyclohexane, 1,4-bis(aminomethyl)-cyclohexane, 1,3-bis(aminomethyl)benzene, BHMT, DETA, TETA, TEPA, DPTA, N3-amine or N4-amine, wherein preferred alkyl groups are 2-phenylethyl, benzyl, isobutyl, hexyl and 2-ethylhexyl.
ciii)-6: Aromatic polyamines of which mention may be made of: m- and p-phenylenediamine; 4,4'-, 2,4' and 2,2'-diaminodiphenylmethane; 3,3'-dichloro-4,4'-diaminodiphenylmethane (MOCA); 2,4- and 2,6-tolylenediamine; mixtures of 3,5-dimethylthio-2,4- and -2,6-tolylenediamine (available as Ethacure^{®} 300 from Albermarle); mixtures of 3,5-diethyl-2,4- and -2,6-tolylene diamine (DETDA); 3,3',5,5'-tetraethyl-4,4'-diaminodiphenylmethane (M-DEA); 3,3',5,5'-tetraethyl-2,2'-dichloro-4,4'-diaminodiphenylmethane (M-CDEA); 3,3'-diisopropyl-5,5'-dimethyl-4,4'-diaminodiphenylmethane (M-MIPA); 3,3',5,5'-tetraisopropyl-4,4'-diaminodiphenylmethane (M-DIPA); 4,4'-diamino diphenyl-sulfone (DDS); 4-amino-N-(4-aminophenyl)benzenesulfonamide; 5,5'-methylenedianthranilic acid; dimethyl-(5,5'-methylenedianthranilate); 1,3-propylene-bis(4-aminobenzoate); 1,4-butylene-bis(4-aminobenzoate); polytetramethylene oxide-bis(4-aminobenzoate) (available as Versalink^{®} from Air Products); 1,2-bis(2-aminophenylthio)ethane, 2-methylpropyl-(4-chloro-3,5-diaminobenzoate); and, tert.butyl-(4-chloro-3,5-diaminobenzoate).
ciii)-7: Polyamidoamines of which indicative members include the reaction products of monohydric or polyhydric carboxylic acids or the esters or anhydrides thereof, - in particular dimer fatty acids - and an aliphatic, cycloaliphatic or aromatic polyamine, for instance polyalkyleneamines such as DETA or TETA. Commercially available polyamidoamines include: Versamid^{®} 100, 125, 140 and 150 (from Cognis); Aradur^{®} 223, 250 and 848 (from Huntsman); Euretek^{®} 3607 and 530 (from Huntsman); and, Beckopox^{®} EH 651, EH 654, EH 655, EH 661 and EH 663 (from Cytec).
ciii)-8: Mannich bases and phenalkamines, examples of which are known in the art and include the commercially available phenalkamines Cardolite^{®} NC-541, NC-557, NC-558, NC-566, Lite 2001 and Lite 2002 (available from Cardolite), Aradur^{®} 3440, 3441, 3442 and 3460 (available from Huntsman) and Beckopox^{®} EH 614, EH 621, EH 624, EH 628 and EH 629 (available from Cytec). In an embodiment, the Mannich base is a phenalkamine and in particular a phenalkamine obtained from the condensation of cardanol (CAS Number: 37330-39-5), an aldehyde and an amine: the reactant amine in the condensation reaction is desirably ethylenediamine or diethyltriamine.

As noted above, the composition of the present disclosure may optionally comprise civ) at least one compound which has at least two reactive mercapto- groups per molecule. Suitable mercapto-group containing compounds, which may be used alone or in combination, include but are not limited to the following.
civ)-1: Liquid mercaptan-terminated polysulfide polymers of which commercial examples include: Thiokol^{®} polymers (available from Morton Thiokol), in particular the types LP-3, LP-33, LP-980, LP-23, LP-55, LP-56, LP-12, LP-31, LP-32 and LP-2 thereof; and, Thioplast^{®} polymers (from Akzo Nobel), in particular the types G10, G112, G131, G1, G12, G21, G22, G44 and G4.
civ)-2: Mercaptan-terminated polyoxyalkylene ethers, obtainable by reacting polyoxyalkylenedi- and - triols either with epichlorohydrin or with an alkylene oxide, followed by sodium hydrogen sulfide.
civ)-3: Mercaptan-terminated compounds in the form of polyoxyalkylene derivatives, known under the trade name of Capcure^{®} (from Cognis), in particular the types WR-8, LOF and 3-800 thereof.
civ)-4: Polyesters of thiocarboxylic acids of which particular examples include: pentaerythritol tetramercapto-acetate (PETMP); trimethylolpropane trimercaptoacetate (TMPMP); glycol dimercaptoacetate; and, the esterification products of polyoxyalkylene diols and triols, ethoxylated trimethylolpropane and polyester diols with thiocarboxylic acids such as thioglycolic acid and 2- or 3-mercaptopropionic acid.
civ)-5: 2,4,6-trimercapto-1,3,5-triazine, 2,2'-(ethylenedioxy)-diethanethiol (triethylene glycol dimercaptan) and / or ethanedithiol.

When constituent civ) is present in the curative, a preference for the use of polyesters of thiocarboxylic acids and, in particular, for the use of at least one of pentaerythritol tetramercapto-acetate (PETMP), trimethylolpropane trimercaptoacetate (TMPMP) and glycol dimercaptoacetate is acknowledged.

When formulating the curable composition, it is preferred that the curative is included in such an amount that the composition *in toto* is characterized by a molar ratio of epoxide-reactive groups to epoxide groups of from 0.95:1 to 1.5: 1, for example from 0.95: 1 to 1.1: 1. Notably, the molar ratio of epoxide-reactive groups to epoxide groups of 1:1 is included within these stated ranges and itself represents a highly preferred molar ratio.

Subject to meeting the above molar ratio terms, the composition may be further characterized by comprising from 10 to 30 wt.%, for example from 15 to 30 wt.% of c) said curative, based on the weight of the composition.

### d) Thermally Conductive Filler

The composition disclosed herein includes a thermally conductive filler. In certain embodiments, the two-component (2K) composition comprises from 20 to 50 wt.%, for example from 20 to 40 wt.% or from 25 to 40 wt.% of thermally conductive filler, based on the weight of the composition.

The thermally conductive filler may be included in the first component, the second component or both of the first and second components of the composition. It is preferred that at least 75 wt.% of the total weight of the thermally conductive filler is included in the first component of the composition.

Broadly, there is no particular intention to limit the shape of the particles employed as thermally conductive fillers: particles that are acicular, spherical, ellipsoidal, cylindrical, bead-like, cubic or platelet-like may be used alone or in combination. Moreover, it is envisaged that agglomerates of particles, including agglomerates of more than one particle type, may be used. It is preferred however that the particles of thermally conductive filler have an aspect ratio of less than 5, such as less than 2, less than 1.5 or less than 1.3. The use of ellipsoidal or spherical particles, for instance, can serve to obviate the composition having an undesirably high viscosity as the conventional loading of the filler.

Equally, there is no particular intention to limit the size of the particles employed as thermally conductive fillers. However, the thermally conductive filler should *in toto* possess an mean volume particle size (Dv50), as measured by laser diffraction, of from 0.1 to 500 µm, for example from 0.5 to 200 µm or from 0.5 to 100 µm. Independently of or additional to this overall mean particle size, the thermally conductive filler may have a polymodal particle size distribution which may be the consequence of combining two or more particulates (P1, P2) which are characterized by different mean volume particle sizes (D_{V}50^{P1}, D_{V}50^{P2}).

Exemplary thermally conductive fillers include metallic filler, inorganic filler, carbon-based filler, thermally conductive polymer particle filler and combinations thereof.

Metallic fillers include metallic particles and particles of metals which possess non-metallic layers on the surfaces thereof the particles. Such non-metallic layers include, but are not limited to metal nitride layers or metal oxide layers. Suitable metallic fillers are exemplified by particles of metals selected from aluminum, copper, gold, nickel, silver and combinations thereof. Suitable metallic fillers are further exemplified by particles of the metals listed above having layers on their surfaces chosen from aluminum nitride, aluminum oxide, copper oxide, nickel oxide, silver oxide and combinations thereof. In an illustrative example, the metallic filler may comprise aluminum particles which having aluminum oxide layers on their surfaces.

Illustrative inorganic fillers, which may be used alone or in combination, include: metal oxides, such as aluminum oxide, beryllium oxide, magnesium oxide and zinc oxide; nitrides, such as aluminum nitride and boron nitride; and, carbides, such as silicon carbide and tungsten carbide. Further examples include aluminum trihydrate, silicone dioxide, barium titanate and magnesium hydroxide.

Carbon-based fillers can include carbon nanotubes, carbon nanostuctures, non-graphitic carbon fibers, diamond, and graphite. The term graphite is intended to encompass herein natural and synthetic crystalline graphites, expanded graphites, graphitic carbons and graphitic carbon fibers. The use of expanded graphite may be mentioned in particular.

The term "*carbon nanotube*" as used herein refers to carbon fullerene, a synthetic graphite, which typically has a molecular weight of greater than 840 g/mole. The term is intended to encompass roped carbon nanotubes, single-walled carbon nanotubes (SWCNT) and multiple walled carbon nanotubes (MWCNT). Single walled carbon nanotubes - having a wall consisting of only one graphene layer - typically have diameters of from 1 to 5 nm; multi-walled carbon nanotubes typically have diameters of from 5 to 200 nm. It is further envisaged that carbon nanotubes having utility herein may be opened or chopped, for which US Patent No. 7,641,829 B2 provides an instructive reference. And still further, the present disclosure does not preclude the use of carbon nanotubes which have been chemically modified through, for example, doping with thionyl chloride (SOCl₂).

The term "*carbon nanostructure*" or "*CNS*" refers herein to a plurality of carbon nanotubes (CNTs) that can exist as a polymeric structure through, in particular, sharing common walls with one another and / or through being one or more of: interdigitated; branched; entangled; or, crosslinked. Thus, carbon nanostructures can be considered to have carbon nanotubes as a base monomer unit of their polymeric structure. In many cases, the constituent carbon nanotubes will be multiple walled carbon nanotubes (MWCNT).

Examples of thermally conductive polymer fillers include oriented polyethylene fibers and nanocellulose. Other examples of polymers that could be used to make thermally conductive fillers include polythiophene and liquid crystalline polymers based on polyesters or epoxies.

In certain embodiments, the composition comprises electrically insulating, thermally conductive fillers. In other embodiments, the thermally conductive filler of the composition comprises at least one particulate chosen from aluminum oxide, aluminum nitride, boron nitride, magnesium oxide, zinc oxide, expanded graphite and mixtures thereof.

In an embodiment, the composition comprises expanded graphite as thermally conductive filler, preferably from 0.5 to 15 wt.%, for example from 1 to 10 wt.% or from 2 to 5 wt.%, based on the weight of the composition, of expanded graphite as part of the thermally conductive filler.

The above described thermally conductive fillers may, in certain embodiments, have been pretreated with a surface treatment agent prior to inclusion in one or both components of the composition. Conventionally, the surface treatment agent will comprise from 0.1 to 5 wt.%, for example from 0.1 to 2 wt.% based on the total weight of the conductive filler.

Exemplary surface treatment agents, which may be used alone or in combination, include but are not limited to: fatty acids; silanes, in particular alkoxysilanes such as hexyltrimethoxysilane, octyltriethoxysilane, decyltrimethoxysilane, dodecyl trimethoxysilane, tetradecyltrimethoxysilane, phenyltrimethoxysilane, phenylethyltrimethoxysilane, octadecyltrimethoxysilane and, octadecyltriethoxysilane; alkoxy-functionalized oligosiloxane; cyclic polyorganosiloxane; hydroxyl-functionalized oligosiloxanes; organochlorosilanes, such as methyltrichlorosilane, dimethyldichlorosilane and trimethyl monochlorosilane; organosilazanes such as hexamethyldisilazane and hexamethylcyclotrisilazane; and organoalkoxysilanes such as methyltrimethoxysilane, vinyltrimethoxysilane, vinyltriethoxysilane, 3-glycidoxypropyltrimethoxysilane and 3-methacryloxypropyltrimethoxysilane.

### e) Additives and Adjunct Ingredients

The compositions of the present disclosure may further comprise adjuvants and additives that can impart improved properties thereto. For instance, the adjuvants and additives may impart one or more of: improved wetting; longer enabled processing time; faster curing time; and, lower residual tack. Included among such adjuvants and additives - which independently of one another may be included in single components or both components of a two-component (2K) composition - are: catalysts; plasticizers; stabilizers including UV stabilizers; antioxidants; tougheners; fillers; drying agents; adhesion promoters; fungicides; flame retardants; rheological adjuvants; color pigments, such as titanium dioxide, iron oxides, or carbon black; color pastes; dyes; and/or optionally also, to a small extent, non-reactive diluents.

For completeness, it is noted that in general adjunct materials and additives which contain epoxide-reactive groups will be blended into the second or hardener component of a two-component (2K) composition. Materials that contain epoxide groups or which are reactive with the hardener(s) are generally formulated into the first, epoxide-containing component of the two-component (2K) composition. Unreactive materials may be formulated into either or both of the A and B components.

The use of catalysts is not required in the present application and indeed, in preferred embodiments, the composition may be substantially free of catalysts. However, in certain circumstances it may be advantageous to add a catalytic amount of one or more substances that promote the reaction between the epoxide groups and the epoxide-reactive groups, for instance the reaction between the amine groups and the epoxide groups. Thus, in certain embodiments, the two component (2K) composition comprises, based on the weight of the composition, from 0 to 2 wt.%, preferably from 0 to 1 wt.% or from 0.1 to 1 wt.% of at least one catalyst.

Without intention to the limit the catalysts used in the present disclosure, mention may be made of the following suitable catalysts: i) acids or compounds hydrolyzable to acids, in particular a) organic carboxylic acids, such as acetic acid, benzoic acid, salicylic acid, 2-nitrobenzoic acid and lactic acid; b) organic sulfonic acids, such as methanesulfonic acid, p-toluenesulfonic acid and 4-dodecylbenzenesulfonic acid; c) sulfonic acid esters; d) inorganic acids, such as phosphoric acid; e) Lewis acid compounds, such as BF₃ amine complexes, SbF₆ sulfonium compounds, bis-arene iron complexes; f) Bronsted acid compounds, such as pentafluoroantimonic acid complexes; and, e) mixtures of the aforementioned acids and acid esters; ii) tertiary amines; iii) quaternary ammonium salts, such as benzyltrimethyl ammonium chloride; iv) amidines, such as 1,8-diazabicyclo[5.4.0]undec-7-ene; v) guanidines, such as 1,1,3,3-tetramethylguanidine; vi) phenols, in particular bisphenols; vii) phenol resins; and, vii) phosphites, such as di- and triphenylphosphites.

The use of at least one tertiary amine as a catalytic compound may be preferred in some embodiments. Examples of suitable tertiary amines, which may be used alone or in combination, include: trimethylamine; triethylamine; tetraethylmethylenediamine; triethylenediamine; hexamethylenetetramine; tetramethylpropane-1,3-diamine; tetra-methylhexane-1,6-diamine; pentamethyldiethylenetriamine; 1,4-diazabicyclo[2.2.2]octane; 1,8-diazabicycloundecene-7; 1,5-diazabicyclo-nonene-5; bis(2-dimethylaminoethyl)ether; ethylene glycol (3-dimethyl)aminopropyl ether; dimethyl-aminoethanol; dimethylaminoethoxyethanol; N,N,N'-trimethylaminoethylethanolamine; dimethylcyclohexylamine; N,N-dimethylaminomethylphenol; N,N-dimethylpropylamine; N,N,N',N'-tetramethylhexamethylenediamine; N-methylpiperidine; N,N'-dimethylpiperazine; N,N-dimethylbenzylamine; α-methylbenzyl dimethylamine; dimethylaminomethylphenol; 2,4,6-tris(dimethylaminomethyl)phenol; dimethylpiperazine; N-methyl-N'-(2-dimethylamino)-ethylpiperazine; N-methylmorpholine; N-(N',N'-(dimethylamino)ethyl)morpholine; N-methyl-N'-(2-hydroxyethyl)morpholine; and, imidazoles, such as N-methylimidazole, N-vinylimidazole and 1,2-dimethylimidazole. The salts of such tertiary amines may also be used.

In an embodiment, a catalyst for the curing the composition may be a photobase generator: upon exposure to UV radiation - typically in the wavelength from 320 to 420 nm - said photobase generator releases an amine, which catalyzes the addition of the epoxide reactive groups to the epoxide. The photobase generator is not specifically limited so long as it generates an amine directly or indirectly with light irradiation. However, suitable photobase generators which may be mentioned include: benzyl carbamates; benzoin carbamates; o-carbamoylhydroxyamines; O-carbamoyloximes; aromatic sulfonamides; alpha-lactams; N- (2-allylethenyl)amides; aryl azide compounds, N-arylformamides, and 4-(ortho-nitrophenyl)dihydropyridines.

In an alternative embodiment, an acid catalyst may be selected from photoacid generators (PAGs): upon irradiation with light energy, ionic photoacid generators undergo a fragmentation reaction and release one or more molecules of Lewis or Bronsted acid that catalyze the ring opening and addition of the pendent epoxide groups to form a crosslink. Useful photoacid generators are thermally stable, do not undergo thermally induced reactions with the forming copolymer and are readily dissolved or dispersed in the curable compositions.

Exemplary cations which may be used as the cationic portion of the ionic PAG of the disclosure include organic onium cations such as those described in US Patent No. 4,250,311, US Patent No. 3,113,708, US Patent No. 4,069,055, US Patent No. 4,216,288, US Patent No. 5,084,586, US Patent No. 5,124,417, and, US Patent No. 5,554,664. The references specifically encompass aliphatic or aromatic Group IVA and VIIA (CAS version) centered onium salts, with a preference being noted for I-, S-, P-, Se- N- and C-centered onium salts, such as those selected from sulfoxonium, iodonium, sulfonium, selenonium, pyridinium, carbonium and phosphonium.

As is known in the art, the nature of the counter-anion in the ionic photoacid generator (PAG) can influence the rate and extent of cationic addition polymerization of the epoxide groups. For illustration, the order of reactivity among commonly used nucleophilic anions is SbF₆ > AsF₆ > PF₆ > BF₄. The influence of the anion on reactivity has been ascribed to three principle factors which the skilled artisan should compensate for in the present disclosure: (1) the acidity of the protonic or Lewis acid generated; (2) the degree of ion-pair separation in the propagating cationic chain; and, (3) the susceptibility of the anions to fluoride abstraction and consequent chain termination.

It is not precluded that the compositions of the present disclosure include alternative photoinitiator compounds to the photobase generator and photoacid generator compounds mentioned herein above, which photoinitiator compound(s) would initiate the polymerization or hardening of the compositions upon irradiation with actinic radiation. It is noted that photo-polymerizable compositions of the present disclosure can be cationically polymerizable or free-radically polymerizable: whilst epoxy groups are cationically active, the election of a free-radical polymerization mechanism imposes the requirement that the composition must contain a compound possessing a free-radically active, unsaturated group such as an acrylate compound, a (meth)acrylate compound, an epoxy-functional acrylate, an epoxy functional (meth)acrylate or a combination thereof. Applying that election, the preferred photoinitiators would be photoactive compounds that undergo a Norrish I cleavage to generate free radicals that can initiate by addition to the acrylic double bonds.

*In toto* photoinitiators should be present in the composition in amount of from 0 to 1.0 wt.%, based on the weight of the composition.

The use of a photoinitiator - and also the photobase generator and photoacid generators mentioned herein above - may produce residue compounds from the photochemical reaction. The residues may be detected by conventional analytical techniques such as: infrared, ultraviolet and NMR spectroscopy; gas or liquid chromatography; and, mass spectroscopy. Thus, the present disclosure may comprise cured (epoxy) matrix copolymers and detectable amounts of residues from a photobase/acid generator. Such residues are present in small amounts and do not normally interfere with the desired physiochemical properties of the product.

Without intention to limit the present disclosure, a mixture comprising one or more photoinitiators may be irradiated with activating radiation to polymerize the monomeric component(s). The purpose of the irradiation is to generate the active species from the photoinitiator which initiates the cure reactions. Once that species is generated, the cure chemistry is subject to the same rules of thermodynamics as any chemical reaction: the reaction rate may be accelerated by heat.

As would be recognized by the skilled artisan, photosensitizers can be incorporated into the compositions to improve the efficiency with which any photoinitiators present use the energy delivered. Photosensitizers are typically used in an amount of from 5 to 25 wt.%, based on the weight of the photoinitiator.

A "*plasticizer*" for the purposes of this disclosure is a substance that decreases the viscosity of the composition and thus facilitates its processability. Herein the plasticizer may constitute up to 10 wt.% or up to 5 wt.%, based on the total weight of the composition, and is preferably selected from the group consisting of: polydimethylsiloxanes (PDMS); diurethanes; ethers of monofunctional, linear or branched C4-C16 alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential.

"*Stabilizers*" for purposes of this disclosure are to be understood as antioxidants, UV stabilizers or hydrolysis stabilizers. Herein stabilizers may constitute *in toto* from 0 to 10 wt.%, for example from 0 to 5 wt.%, based on the total weight of the composition. Standard commercial examples of stabilizers suitable for use herein include: sterically hindered phenols; thioethers; benzotriazoles; benzophenones; benzoates; cyanoacrylates; acrylates; amines of the hindered amine light stabilizer (HALS) type; phosphorus; sulfur; and, mixtures thereof.

Whilst the composition of the present disclosure necessarily comprises a thermally conductive filler, this does not preclude the presence in the composition of further fillers. Such fillers may serve as *inter alia* reinforcing fillers, extending fillers, magnetic fillers, electrically conductive fillers or as absorbers of electromagnetic radiation. Whilst such further fillers should be typically comprise more than 10 wt.% of the weight of the composition, the desired viscosity of the curable composition will typically be determinative of the total amount of further filler which may be added.

Exemplary further inorganic fillers include for example, chalk, lime powder, precipitated and/or pyrogenic silicic acid, zeolites, bentonites, magnesium carbonate, diatomite, clay, talc, titanium oxide, iron oxide, sand, quartz, flint, mica, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, Kevlar fibers, or polyethylene fibers can also be added.

The pyrogenic and/or precipitated silica may advantageously have a BET surface area from 10 to 90 m²/g: when they are used, such silicas do not cause any additional increase in the viscosity of the composition according to the present disclosure, but do contribute to strengthening the cured composition. It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silica.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

It is noted that compounds having metal chelating properties may also be used in the compositions of the present disclosure to help enhance the adhesion of the cured composition to a substrate surface. Also suitable for use as adhesion promoters are the acetoacetate-functionalized modifying resins sold by King Industries under the trade name K-FLEX XM-B301.

A need also occasionally exists to lower the viscosity of the composition according to the present disclosure for specific applications, by using non-reactive diluent(s). For instance, but for illustration only, the composition may contain one or more of: xylene; 2-methoxyethanol; dimethoxyethanol; 2-ethoxyethanol; 2-propoxyethanol; 2-isopropoxyethanol; 2-butoxyethanol; 2-phenoxyethanol; 2-benzyloxyethanol; benzyl alcohol; ethylene glycol; ethylene glycol dimethyl ether; ethylene glycol diethyl ether; ethylene glycol dibutyl ether; ethylene glycol diphenyl ether; diethylene glycol; diethylene glycol-monomethyl ether; diethylene glycol-monoethyl ether; diethylene glycol-mono-n-butyl ether; diethylene glycol dimethyl ether; diethylene glycol diethyl ether; diethylene glycoldi-n-butylyl ether; propylene glycol butyl ether; propylene glycol phenyl ether; dipropylene glycol; dipropylene glycol monomethyl ether; dipropylene glycol dimethyl ether; dipropylene glycoldi-n-butyl ether; N-methylpyrrolidone; diphenylmethane; diisopropylnaphthalene; petroleum fractions such as Solvesso^{®} products (available from Exxon); alkylphenols, such as tert-butylphenol, nonylphenol, dodecylphenol and 8,11,14-pentadecatrienylphenol; styrenated phenol; bisphenols; aromatic hydrocarbon resins especially those containing phenol groups, such as ethoxylated or propoxylated phenols; adipates; sebacates; phthalates; benzoates; organic phosphoric or sulfonic acid esters; and sulfonamides.

The above aside, it is preferred that said non-reactive diluents constitute less than 10 wt.%, in particular less than 5 wt.% or less than 2 wt.%, based on the total weight of the composition.

### ILLUSTRATIVE EMBODIMENT OF THE COMPOSITION

In an illustrative but non-limiting embodiment, the two-component (2K) composition comprises, based on the weight of the composition:
a first component comprising:
   from 30 to 50 wt.% of a) at least one liquid diglycidyl ether of a dihydric phenol, said diglycidyl ether being characterized by an epoxide equivalent weight of from 100 to 320 g/eq. and a viscosity of from 100 to 5000 mPa.s as determined at 25°C and 50% Relative Humidity; and,
   from 1 to 8 wt.% of b) at least one liquid epoxide compound which acts as a diluent for said part a) and which has from 2 to 4 epoxide groups per molecule and an epoxide equivalent weight of from 100 to 320 g/eq; and,
a second component comprising:
   from 15 to 30 wt.% of c) a curative comprising at least two compounds which each possess at least two epoxide reactive groups per molecule, wherein said curative comprises:
   ci) at least one cycloaliphatic polyamine having at least one primary amine group (-NH₂); and,
   cii) at least one acyclic polyamine having a tertiary amine group and at least one, preferably at least two amine groups chosen from primary amine groups, secondary amine groups and combinations thereof;

   wherein the composition further comprises from 20 to 40 wt.% of d) thermally conductive filler comprising at least one particulate chosen from aluminum oxide, aluminum nitride, boron nitride, magnesium oxide, zinc oxide, expanded graphite and mixtures thereof; and,
   wherein the composition is characterized by a molar ratio of epoxide-reactive groups to epoxide groups from 0.95:1 to 1.5: 1.

### METHODS AND APPLICATIONS

To form the two-component (2K) curable compositions, the reactive components are brought together and mixed in such a manner as to induce the hardening thereof: the reactive compounds should be mixed under sufficient shear forces to yield a homogeneous mixture. It is considered that this can be achieved without special conditions or special equipment. That said, suitable mixing devices might include: static mixing devices; magnetic stir bar apparatuses; wire whisk devices; augers; batch mixers; planetary mixers; C.W. Brabender or Banburry^{®} style mixers; and, high shear mixers, such as blade-style blenders and rotary impellers.

For small-scale liner applications in which volumes of less than 2 liters will generally be used, the preferred packaging for the two-component (2K) compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger volume applications, the two components of the composition may advantageously be stored in drums or pails: in this case, the two components are extruded via hydraulic presses, in particular by way of follower plates, and are supplied via pipelines to a mixing apparatus which can ensure fine and highly homogeneous mixing of the first and second components. In any event, for any package it is important that the first component be disposed with an airtight and moisture-tight seal, so that both components can be stored for a long time, ideally for 12 months or longer.

Non-limiting examples of two-component dispensing apparatuses and methods that may be suitable for the present disclosure include those described in U.S. Patent No. 6,129,244 and US Patent No. 8,313,006.

The two-component (2K) curable compositions should broadly be formulated to exhibit an initial viscosity - determined within two minutes of the mixing of the components - of less than 10000 mPa·s, for instance less than 8000 mPa.s or even less than 5000 mPa.s, at 25°C. The composition may desirably have an initial viscosity of from 1000 to 5000 mPa.s or from 1000 to 4000 mPa.s, as determined at 25°C. Independently of or additional to said viscosity characteristics, the two-component (2K) composition should be formulated to be bubble (foam) free upon mixing and subsequent curing.

The initially mixed compositions may then be applied to substrates by conventional methods such as: casting; brushing; roll coating; doctor-blade application; printing methods; jetting; omega coating; control seam coating; dot coating; and, spraying methods, including but not limited to air-atomized spray, air-assisted spray, airless spray, high-volume low-pressure spray, slot spray and curtain spray coating.

For coating, adhesive and sealant applications, it is recommended that the compositions be applied to a wet film thickness of from 10 to 250 µm, for example from 25 to 150 µm. The application of thinner layers within this range is more economical and provides for a reduced likelihood of thick cured regions that may - for coating applications - require sanding. However, great control must be exercised in applying thinner coatings or layers so as to avoid the formation of discontinuous cured films.

In an alternative statement, which is not intended to be mutually exclusive of the above, it is recommended that the compositions be applied such that the coating weight of the materials is from 50 to 250 grams per square metre (gsm), preferably from 50 to 150 gsm.

The two-component (2K) composition may typically be formulated to demonstrate a setting time of at least 30 minutes and more commonly of from 60 to 540 minutes or from 180 to 540 minutes, which setting time is understood herein to be the time after which the viscosity of the composition - when maintained at 25°C - has doubled from its initial viscosity. The rate of curing of the compositions can, of course, be moderated by the input of energy.

The curing of the compositions of the disclosure typically occurs at temperatures in the range of from -10°C to 120°C, preferably from 0°C to 70°C, and in particular from 20°C to 60°C. The temperature that is suitable depends on the specific compounds present and the desired curing rate and can be determined in the individual case by the skilled artisan, using simple preliminary tests if necessary. Of course, curing at temperatures of from 10°C to 35°C or from 20°C to 30°C is especially advantageous as it obviates the requirement to substantially heat or cool the mixture from the usually prevailing ambient temperature. Where applicable, however, the temperature of the mixture formed from the respective components of the two-component (2K) composition may be raised above the mixing temperature and / or the application temperature using conventional means including microwave induction.

In those embodiments, where the compositions are curable under photo-irradiation, the energy source used to promote the curing of the applied materials will emit at least one of ultraviolet (UV) radiation, infrared (IR) radiation, visible light, X-rays, gamma rays, or electron beams (e-beam). Subsequent to their application, the compositions may typically be activated in less than 2 minutes, and commonly between 0.1 and 100 seconds - for instance between 0.1 and 10 seconds - when irradiated using commercial curing equipment. For completeness, the activation of the compositions may be effected in an inline process wherein the coated substrate is conveyed under the curing equipment as it emits radiation: it will be understood that the aforementioned activation times will be the time of exposure of the applied compositions to the irradiation in such an inline process.

Irradiating ultraviolet light should typically have a wavelength of from 150 to 600 nm and preferably a wavelength of from 200 to 450 nm. Useful sources of UV light include, for instance, low intensity fluorescent lamps, metal halide lamps, microwave powered lamps, xenon lamps, UV-LED lamps and laser beam sources such as excimer lasers and argon-ion lasers. The use of UV-LED lamps is preferred whereas the use of mercury-based UV light systems is neither desirable nor required.

Where an e-beam is utilized to cure the applied composition, standard parameters for the operating device may be: an accelerating voltage of from 0.1 to 100 keV; a vacuum of from 10 to 10⁻³ Pa; an electron current of from 0.0001 to 1 ampere; and, power of from 0.1 watt to 1 kilowatt.

The amount of radiation necessary to sufficiently cure an individual composition - such that a coating thereof becomes fixed, for example - will depend on a variety of factors including the angle of exposure to the radiation and the thickness of an applied composition. Broadly, however, a curing dosage of from 100 to 10000 mJ/cm² may be cited as being typical: curing dosages of from 200 to 8000 mJ/cm², such as from 300 to 6000 mJ/cm² may be considered highly effective.

The compositions of the present disclosure may find utility *inter alia* as: casting resins; potting and encapsulation resins; binding agents for fibers and / or particles; the coating of glass; the coating of mineral building materials, such as lime- and / or cement-bonded plasters, gypsum-containing surfaces, fiber cement building materials and concrete; the coating, sealing and adhesion of wood and wooden materials, such as chipboard, fiber board and paper; the coating, sealing and adhesion of metallic substrates; and, the coating, sealing and adhesion of various plastic surfaces.

For completeness, it is noted that the present disclosure does not preclude the preparation of compositions in the form of "*film adhesive*"*.* A pre-polymer mixture of epoxide compounds, curative and other desired components is applied as a coating onto a polymer film substrate, rolled up and stored at a sufficiently low temperature to inhibit the chemical reactions between the components. When needed, the film adhesive is removed from the low temperature environment and applied to a metal or composite part, the backing is stripped off and the assembly completed and cured in an oven or autoclave.

In that embodiment where the composition is to be employed in the potting of electronic components, the initially mixed composition would typically be introduced into a defined mold by static potting or centrifugal potting. In a static potting technique, the composition is introduced into the potting mold while the mold is substantially stationary. In centrifugal potting methods, the composition is introduced into a potting mold whilst the mold is rotated such that the rotation of the mold forces the potting composition towards an end of the rotating mold by centrifugal force.

In either the static or centrifugal potting methods, the introduction of the composition may be either through contact or non-contact means. As an exemplary contact methodology, mention may be made of funneling. As exemplary non-contact methodologies, there may be mentioned jetting, omega coating, control seam coating and slot spray coating. The introduction of the potting composition under pressure is not required but should a pressurized application be elected, suitable pressures may be from 1.5 to 20 bars, for example from 2 to 10 bars.

The above aside, central to any method of application is that the potting composition is sufficiently fluid upon introduction into the mold for it to penetrate the desired regions of the electronic component at least partially disposed therein and then to harden to seal or encapsulate said regions. Upon introduction into the mold, the composition may be characterized by a viscosity of less than 10000 mPa·s, for instance less than 8000 mPa.s or even less than 5000 mPa.s as determined at 25°C. Where applicable, the temperature of the potting composition may be raised from its initial or formation temperature to its introduction temperature using conventional means, such as: convection ovens; vacuum melting furnace; resistance heating rods; and, arc melters.

The employment of a static molding process as described does not preclude the application of vibration to the composition whilst it is in the liquid state. As such, a potting apparatus may include at least one vibration imparting device. In an illustrative embodiment, the apparatus employed for the application of the potting composition to the electronic component includes: a heater for the potting composition; a mold configured to receive the potting portion of the electronic component; and, a conveyance assembly comprising one or more channels, the assembly providing fluid communication of the liquid composition between the heater and the mold, wherein the apparatus is characterized in that it further comprises at least one vibration imparting device.

The vibration imparting device should not be disposed in the internal volume of the mold or, more particularly, within the molten potting material itself. Typically, the vibration imparting device will directly contact an outside surface of the mold or, alternatively, be disposed sufficiently proximate to an outside surface of the mold to ensure the efficacy of the generated vibrations relative to the potting composition disposed therein. In an exemplary embodiment, a vibration table is provided which comprises a static base and an oscillatory planar top on which the mold is disposed during the potting operation. The oscillations may occur along one or more axis - for instance along the major vertical (y) and / or horizontal (x) axes. Moreover, the vibration table may adapted to tilt the plane on which the mold is disposed. Illustrative vibration tables which may have utility in the present disclosure are described in: US Patent No. 4,483,621 (Kreiskorte); US Patent No. 7,802,355 (Spangenberg); and, US2020/0149990 (Nie et al.).

The vibration of the potting composition in the mold serves to reduce the porosity of the potting composition as it hardens in the mold. The composition may contain gas - which has become entrained therein during the heating and conveyance of the composition - and the applied vibration has a degassing effect which can negate or reduce the need to include degassing agents in the potting composition.

The potting composition may be allowed to fully cure within the mold. In some embodiments however, particularly where the mold is to be utilized in a further potting step, the potting composition is permitted to partially cure in the mold; the partially cured potting compositions is then withdrawn from the mold and permitted to fully cure externally.

The term "*partially cured*" means that curing of the curable coating composition has been initiated and that, for example, cross-linking of components of the composition has commenced. The term encompasses any amount of cure upon application of the curing condition, from the formation of a single cross-link up to but not including a fully cross-linked state. The rate and mechanism with which the composition cures is contingent on various factors, including the components thereof, functional groups of the components and the parameters of the curing condition.

At least partial solidification of a given composition is generally indicative of cure. However, cure may be indicated in other ways including, for instance, a viscosity change of the composition, an increased temperature of that composition and / or a transparency / opacity change of that composition.

Typically, the partially cured composition should not be removed from the mold until the composition can substantially retain its shape upon exposure to ambient conditions. By "*substantially retain its shape*" is meant that at least about 50% by volume, and more usually at least about 80% or about 90% by volume of the at least partially cured composition retains its shape and does not flow or deform upon exposure to ambient conditions for a period of 5 minutes. Under such circumstances, gravity typically may not substantially impact the shape of the at least partially cured or partially dried layer upon exposure to ambient conditions.

The shape of a potting layer of partially cured composition - disposed on an electronic component such as a coil, stator or printed circuit board (PCB) for instance - may typically impact whether that layer substantially retains its shape. For example, when the layer is rectangular or has another simplistic shape, the at least partially cured layer may be more resistant to deformation at even lesser levels of cure than layers having more complex shapes.

The following examples are illustrative of the present invention and are not intended to limit the scope of the invention in any way.

### EXAMPLES

The following commercial products were used in the Examples.
Bisphenol F Diglycidyl Ether (Type 1) having a viscosity of 2300 mPa.s.
Bisphenol F Diglycidyl Ether (Type 2) having a viscosity of 1500 mPa.s.
DMAPAPA: N,N-dimethyldipropylenetriamine, available from BASF SE.
Ancamine 2167: Cycloaliphatic amine, available from Evonik Industries AG.
The remaining listed ingredients may be obtained from Sigma Aldrich.

Respective first components (C1) of seven (7) exemplary curable composition were prepared by simple mixing of the constituents listed in Table 1 below. For completeness, the percentages by weight in Table 1 are of the first component *per se.*

**Table 1**

| **Ingredient** | **Ex. 1 (wt.%)** | **Ex. 2 (wt.%)** | **Ex. 3 (wt.%)** | **Ex. 4 (wt.%)** | **Ex. 5 (wt.%)** | **Ex. 6 (wt.%)** | **Ex. 7 (wt.%)** |
|---|---|---|---|---|---|---|---|
| Bisphenol F Diglycidyl Ether (Type 1) | 49.5 | | 49.5 | 49.5 | | | |
| Bisphenol F Diglycidyl Ether (Type 2) | | 49.5 | | | 49.5 | 49.5 | 44.6 |
| Trimethylol ethane triglycidyl ether | 4.9 | 4.9 | | | 4.9 | 4.9 | 9.8 |
| Trimethylol propane triglycidyl ether | | | 4.9 | 4.9 | | | |
| Boron Nitride | 11.3 | 11.3 | 11.3 | 11.3 | 11.3 | 11.3 | 11.3 |
| Expanded Graphite | 2.3 | 2.3 | 2.3 | 2.3 | 2.3 | 2.3 | 2.3 |
| Tabular Alumina | 30.6 | 30.6 | 30.6 | | | | 30.6 |
| Spherical Alumina | | | | | | | |
| Roundish Alumina | | | | 30.6 | | | |
| Magnesium Oxide | | | | | 30.6 | | |
| (3-Glycidyloxypropyl) trimethoxysilane | 0.8 | 0.8 | 0.8 | 0.8 | 0.8 | 0.8 | 0.8 |
| Wetting agent package | 0.6 | 0.6 | 0.6 | 0.6 | 0.6 | 0.6 | 0.6 |

Respective second components (C2) of the seven (7) exemplary curable composition were prepared by simple mixing of the constituents listed in Table 2 below. For completeness, the percentages by weight in Table 2 are of the second component *per se.*

**Table 2**

| **Ingredient** | **Ex. 1 (wt.%)** | **Ex. 2 (wt.%)** | **Ex. 3 (wt.%)** | **Ex. 4 (wt.%)** | **Ex. 5 (wt.%)** | **Ex. 6 (wt.%)** | **Ex. 7 (wt.%)** |
|---|---|---|---|---|---|---|---|
| Cyclohexane-1,2-diamine | 46.4 | 46.4 | 46.4 | 46.4 | 46.4 | 46.4 | 46.3 |
| DMAPAPA | 9.7 | 9.7 | 9.7 | 9.7 | 9.7 | 9.7 | 9.6 |
| Ancamine 2167 | 43.9 | 43.9 | 43.9 | 43.9 | 43.9 | 43.9 | 44.1 |

The first component (C1) and the second component (C2) of each example were combined at a ratio by weight (C1: C2) of 7.5:1. The obtained compositions were then subjected to the following tests.

Initial Viscosity (Pa.s): The initial viscosity of each exemplary composition was determined at 25°C within two minutes of mixing the first (C1) and second (C2) components using a cone and plate rheometer having a 40mm 1° steel cone with a truncation gap of 30 microns. A 500 mg sample of each composition was used for the measurement and a shear rate of 40 s⁻¹ was applied.

Setting Time (minutes): The time taken for the viscosity of the exemplary composition to double from the initial viscosity, when maintained at 25°C, is recorded as the setting time. Viscosity over time is measured using the aforementioned cone and plate rheometer having a 40mm 1° steel cone with a truncation gap of 30 microns. A 500 mg sample of each composition was used for each measurement and a shear rate of 40 s⁻¹ was applied.

Thermal Conductivity (W/m*K): Samples of the exemplary compositions were cured at 120°C for 2 hours. Post-cure, the thermal conductivity of the samples was measured at 25°C and 50% relative humidity in accordance with ASTM E1530-19 (2019) *Standard Test Method for Evaluating the Resistance to Thermal Transmission by the Guarded Heat Flow Meter Technique.*

Glass Transition Temperature (Tg, °C): Samples of the exemplary compositions were cured at 120°C for 2 hours. Post-cure, the glass transition temperatures of the samples were determined by Differential Scanning Calorimetry (DSC) in accordance with DIN 53 765 using a 15mg sample size of the obtained, cured compositions and a heating / cooling rate of 20 K/min.

Retained Shear Strength (%): The lap shear test substrate was aluminium (Alu3003), the surface of which had been cleaned with an ethyl acetate wipe. The substrate was provided at a thickness of 0.1 inch and cut into 2.5 cm x 10 cm (1" x 4") samples for tensile testing of at least four replicates for each exemplary composition used to form the adhesive bond, after application of said compositions and curing at 120°C for 2 hours. The bond overlapping area for each stated substrate was 2.5 cm x 2.5 cm (1" x 1") with a bond thickness of 0.1 cm (40 mil). Tensile lap shear (TLS) test was performed at room temperature based upon ASTM D1002-10 (2019) *Standard Test Method for Apparent Shear Strength of Single-Lap-Joint Adhesively Bonded Metal Specimens by Tension Loading (Metal-to-Metal).* For each exemplary composition, determinations of the initial shear strength at hour 0 (So, MPa) and shear strength following storage at 180°C for 1000 hours (S₁₀₀₀, MPa) were made and averaged across the provided replicates. The percentage retained shear strength was then calculated (100*S₁₀₀₀/S₀).

The results of the aforementioned tests are provided in Table 3 herein below.

**Table 3**

| **Tested Property** | **Ex. 1** | **Ex. 2** | **Ex. 3** | **Ex. 4** | **Ex. 5** | **Ex. 6** | **Ex. 7** |
|---|---|---|---|---|---|---|---|
| Thermal Conductivity (W/m*K) | 1.1 | 1.1 | 1.1 | 1.1 | 1.0 | 1.0 | 1.0 |
| Initial Viscosity (Pa.s) | 2.2 | 3.7 | 3.2 | 2.8 | 4.6 | 3.8 | 3.7 |
| Glass Transition Temperature (°C) | 113.0 | 118.0 | 119.0 | 119.0 | 118.0 | 118.0 | 116.0 |
| Setting Time (minutes) | 390 | 390 | 390 | 390 | 390 | 390 | 390 |
| Retained Shear Strength (%) | 60 | 60 | 60 | 60 | 60 | 60 | 60 |

In view of the foregoing description and examples, it will be apparent to those skilled in the art that equivalent modifications thereof can be made without departing from the scope of the appended claims.

## Claims

1. A two-component (2K) composition comprising:
a first component comprising:
a) at least one liquid polyglycidyl ether of a polyhydric phenol, said polyglycidyl ether being **characterized by** a viscosity of from 100 to 5000 mPa.s as determined at 25°C and 50% Relative Humidity; and,
b) at least one liquid epoxide compound which acts as a diluent for said part a) and which has from 1 to 6 epoxide groups per molecule; and,
a second component comprising:
c) a curative comprising at least two compounds which each possess at least two epoxide reactive groups per molecule, wherein said curative comprises:
ci) at least one cycloaliphatic polyamine; and,
cii) at least one acyclic polyamine having a tertiary amine group and at least one, preferably at least two amine groups chosen from primary amine groups, secondary amine groups and combinations thereof;
wherein the composition further comprises d) thermally conductive filler; and,
wherein the composition is **characterized by** a molar ratio of epoxide-reactive groups to epoxide groups from 0.95:1 to 1.5: 1.

2. The two-component (2K) composition according to claim 1 comprising, based on the weight of the composition:
a first component comprising:
from 30 to 60 wt.%, preferably from 30 to 50 wt.% of a) at least one liquid polyglycidyl ether of a polyhydric phenol, said polyglycidyl ether being **characterized by** a viscosity of from 100 to 5000 mPa.s as determined at 25°C and 50% Relative Humidity; and,
from 1 to 10 wt.%, preferably from 1 to 8 wt.% of b) at least one liquid epoxide compound which acts as a diluent for said part a) and which has from 1 to 6 epoxide groups per molecule; and,
a second component comprising:
from 10 to 30 wt.%, preferably from 15 to 30 wt.% of c) a curative comprising at least two compounds which each possess at least two epoxide reactive groups per molecule, wherein said curative comprises:
ci) at least one cycloaliphatic polyamine; and,
cii) at least one acyclic polyamine having a tertiary amine group and at least one, preferably at least two amine groups chosen from primary amine groups, secondary amine groups and combinations thereof;
wherein the composition further comprises from 20 to 50 wt.%, preferably from 20 to 40 wt.% of d) said thermally conductive filler; and,
wherein the composition is **characterized by** a molar ratio of epoxide-reactive groups to epoxide groups from 0.95:1 to 1.5: 1.

3. The composition according to claim 1 or claim 2, wherein the liquid polyglycidyl ether of part a) has a viscosity of from 500 to 5000 mPa.s, preferably from 500 to 4000 mPa.s, more preferably from 1000 to 3000 mPa.s as determined at 25°C and 50% Relative Humidity.

4. The composition according to claim 1 or claim 2, wherein the liquid polyglycidyl ether of part a) has an epoxide equivalent weight of from 100 to 320 g/eq.

5. The composition according to any one of claims 1 to 4, wherein part a) comprises or consists of at least one digylcidyl ether of a dihydric phenol.

6. The composition according to claim 5, wherein part a) comprises or consists of at least one diglycidyl ether chosen from: diglycidyl ethers of bisphenol A; diglycidyl ethers of bisphenol F; and, mixtures thereof.

7. The composition according to any one of claims 1 to 6, wherein the liquid epoxide of part b) has from 2 to 6 epoxide groups per molecule, preferably from 2 to 4 epoxide groups per molecule and more preferably 3 epoxide groups per molecule.

8. The composition according to any one of claims 1 to 7, wherein the liquid epoxide of part b) has an epoxide equivalent weight of from 100 to 320 g/eq.

9. The composition according to any one of claims 1 to 8, wherein part b) comprises trimethylolethane triglycidyl ether, trimethylolpropane triglycidyl ether or mixtures thereof.

10. The composition according to any one of claims 1 to 9, wherein the cycloaliphatic polyamine of constituent ci) has at least one primary amine group (-NH₂).

11. The composition according to any one of claims 1 to 10, wherein part ci) comprises or consists of cyclohexane-1,2-diamine.

12. The composition according to any one of claims 1 to 11, wherein part cii) comprises or consists of N,N-dimethyldipropylenetriatnine.

13. The composition according to any one of claims 1 to 12, wherein the particles of thermally conductive filler are **characterized by**:
an aspect ratio of less than 2, preferably less than 1.5 or more preferably less than 1.3; and / or,
a mean volume particle size (D_{V}50), as measured by laser diffraction, of from 0.1 to 500 µm, preferably from 0.5 to 200 µm or more preferably from 0.5 to 100 µm.

14. The composition according to any one of claims 1 to 13, wherein said thermally conductive filler is chosen from aluminum oxide, aluminum nitride, boron nitride, magnesium oxide, zinc oxide, expanded graphite and mixtures thereof.

15. A cured product obtained from the composition as defined in any one of claims 1 to 14.

16. The cured product according to claim 15 having a thermal conductivity of 0.5 to 2.5 W/m*K, preferably from 0.6 to 1.8 W/m*K, most preferably from 0.8 to 1.4 W/m*K.

17. Use of the cured product as defined in claim 15 or claim 16 in the potting of electronic components.
